# EUROPEAN PATENT APPLICATION

(11) **EP 3 196 763 A1**
(43) Date of publication of application: **26.07.2017**
(21) Application number: 15803631.9
(22) Date of filing: 24.03.2015
(51) Int. Cl.: G06F 9/46, G06F 12/02

(54) **MEMORY CLEANING METHOD AND APPARATUS**

(30) Priority: 22.07.2014 CN 201410351366
(71) Applicant: ZTE Corporation, Shenzhen, Guangdong 518057 (CN)
(72) Inventor: GU, Youpeng, Shenzhen Guangdong 518057 (CN); ZHONG, Sheng, Shenzhen Guangdong 518057 (CN); XU, Lifeng, Shenzhen Guangdong 518057 (CN)
(74) Representative: Awapatent AB
(86) International application number: PCT/CN2015/074985
(87) International publication number: WO 2015/184909

(57) **Abstract**

Provided are a method and apparatus for cleaning memory. The method comprises the following steps: obtaining a plurality of application processes running simultaneously with a first application process in multiple running processes; selecting part of the application processes from the plurality of application processes, herein the part of the application processes are determined according to a running probability of each application process of the plurality of application processes in the multiple running processes; and cleaning a first set of memory pages corresponding to the part of the application processes. The method enhances the effectiveness of the memory cleaning and increases the response speed of the system.

## Description

### Technical Field

The present invention relates to the field of communications, and more particularly, to a method and apparatus for cleaning memory.

### Background

Memory cleaning is of great significance to keep stable and smooth running of mobile terminals. The memory cleaning algorithm mentioned in the related art is usually implemented based on the priority and the least recently used LRU algorithm. The main idea of the memory cleaning algorithm mentioned in the related art lies in that: first process spaces with low priorities are cleaned when the memory is not enough and needs to be cleaned, and the process spaces are cleaned in an order of LRU (i.e., the most recently used space is cleaned at the end) in the case that the priorities are the same. Although the algorithm is simple, straightforward and efficient, modem programming design often follows the idea of modularization design, that is, the running of a program needs to rely on existence of other application processes. Therefore, if how to clean memory is determined only based on the process priority and the LRU algorithm, there will be situation that application memory that required to be used by the current applications in the running process will also be cleaned at the same time, resulting that the cleaned memory is required to be recovered.

Thus it can be seen, the memory cleaning method provided in the related art neglects the memory dependence relationship between application processes.

### Summary of the Invention

Embodiments of the present invention provide a method and apparatus for cleaning memory to at least solve the problem that the memory cleaning method provided in the related art does not consider the dependency between application processes.

According to an aspect of an embodiment of the present invention, a method for cleaning memory is provided.

The method for cleaning memory according to an embodiment of the present invention includes: obtaining a plurality of application processes running simultaneously with a first application process in multiple running processes of the first application process; selecting part of the application processes from the plurality of application processes, herein the part of the application processes are determined according to a running probability of each application process of the plurality of application processes in the multiple running processes; and cleaning a first set of memory pages corresponding to the part of the application processes.

In an exemplary embodiment, selecting the part of the application processes from the plurality of application processes includes: obtaining a first number of running times of the first application process in the multiple running processes; obtaining a second number of running times of each application process in the multiple running processes; calculating the running probability by a ratio of the second number of running times to the first number of running times; and selecting the part of the application processes in an order of the running probability from low to high.

In an exemplary embodiment, before the part of the application processes is selected from the plurality of application processes, the method further includes: obtaining a second set of memory pages corresponding to other application processes that are not contained in the plurality of application processes in the multiple running processes; and cleaning the obtained second set of memory pages.

In an exemplary embodiment, cleaning the first set of memory pages corresponding to the part of the application processes includes: obtaining a third set of memory pages to be cleaned, herein the third set of memory pages contains the first set of memory pages, and the third set of memory pages is a supplementary set of the second set of memory pages; and selecting the first set of memory pages to clean from the third set of memory pages according to the part of the application processes, herein in each cleaning process, one memory page is selected from the first set of memory pages as a cleaned object by using a least recently used LRU algorithm.

In an exemplary embodiment, after the first set of memory pages corresponding to the part of the application processes is cleaned, the method further includes: determining whether a memory space obtained after the first set of memory pages is cleaned from the third set of memory pages satisfies a preset condition; if no, masking the part of the application processes out from the plurality of application processes, and then continuing to select one or more application processes from the remaining application processes in an order of the running probability from low to high until the preset condition is satisfied; and cleaning a fourth set of memory pages corresponding to the re-selected one or more application processes.

According to another aspect of the embodiment of the present invention, an apparatus for cleaning memory is provided.

The apparatus for cleaning memory according to an embodiment of the present invention includes a first obtaining module, a first selecting module and a first cleaning module. The first obtaining module is arranged to obtain a plurality of application processes running simultaneously with a first application process in multiple running processes of the first application process. The first selecting module is arranged to select part of the application processes from the plurality of application processes. Herein, the part of the application processes are determined according to a running probability of each application process of the plurality of application processes in the multiple running processes. The first cleaning module is arranged to clean a first set of memory pages corresponding to the part of the application processes.

In an exemplary embodiment, the first selecting module includes a first obtaining unit, a second obtaining unit, a calculating unit and a selecting unit. The first obtaining unit is arranged to obtain a first number of running times of the first application process in the multiple running processes. The second obtaining unit is arranged to obtain a second number of running times of each application process in the multiple running processes. The calculating unit is arranged to calculate the running probability by a ratio of the second number of running times to the first number of running times. The selecting unit is arranged to select the part of the application processes in an order of the running probability from low to high.

In an exemplary embodiment, the abovementioned apparatus further includes a second obtaining module and a second cleaning module. The second obtaining module is arranged to obtain a second set of memory pages corresponding to other application processes that are not contained in the plurality of application processes in the multiple running processes. The second cleaning module is arranged to clean the obtained second set of memory pages.

In an exemplary embodiment, the first cleaning module includes a third obtaining unit and a cleaning unit. The third obtaining unit is arranged to obtain a third set of memory pages to be cleaned. Herein, the third set of memory pages contains the first set of memory pages, and the third set of memory pages is a supplementary set of the second set of memory pages. The cleaning unit is arranged to select the first set of memory pages to clean from the third set of memory pages according to the part of the application processes. Herein, in each cleaning process, one memory page is selected from the first set of memory pages as a cleaned object by using a least recently used LRU algorithm.

In an exemplary embodiment, the abovementioned apparatus further includes a determining module, a second selecting module and a third cleaning module. The determining module is arranged to determine whether a memory space obtained after the first set of memory pages is cleaned from the third set of memory pages satisfies a preset condition. The second selecting module is arranged to, when an output of the determining module is no, mask the part of the application processes out from the plurality of application processes, and then continue to select one or more application processes from the remaining application processes in an order of the running probability from low to high until the preset condition is satisfied. The third cleaning module is arranged to clean a fourth set of memory pages corresponding to the re-selected one or more application processes.

Through the embodiments of the present invention, a plurality of application processes running simultaneously with the first application process in multiple running processes are obtained, and part of the application processes are selected from the plurality of application processes. Herein, the part of the application processes are determined according to the running probability of each application process of the plurality of application processes in the multiple running processes. A first set of memory pages corresponding to the part of the application processes are cleaned. Therefore, the problem that the memory cleaning method provided in the related art does not take into account dependencies between application processes is solved, thereby enhancing the effectiveness of the memory cleaning and increasing the response speed of the system.

### Description of the Drawings

The accompanying drawings described herein are intended to provide a further understanding of the present invention and form a part thereof. The illustrative embodiments of the present invention and their description are used to explain the present invention and are not construed as limiting the present invention improperly. In the accompanying drawings:
FIG. 1 is a flow chart of a method for cleaning memory in accordance with an embodiment of the present invention;
FIG. 2 is a flow chart of a memory cleaning process in accordance with an alternative embodiment of the present invention;
FIG. 3 is a schematic diagram of a statistical data structure in accordance with an alternative embodiment of the present invention;
FIG. 4 is a block diagram of an apparatus for cleaning memory in accordance with an embodiment of the present invention; and
FIG. 5 is a block diagram of an apparatus for cleaning memory in accordance with an alternative embodiment of the present invention.

### Specific Embodiments

The present invention will be described in detail below with reference to the accompanying drawings and in conjunction with embodiments. It should be noted that, in the case of no conflict, embodiments in the present application and features in the embodiments may be combined with each other.

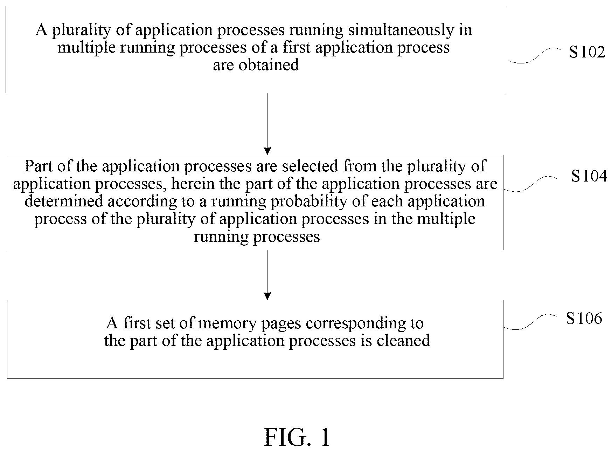

FIG. 1 is a flow chart of a method for cleaning memory in accordance with an embodiment of the present invention. As shown in FIG. 1, the method may include the following steps S102-S106.

In step S102, a plurality of application processes running simultaneously with a first application process in multiple running processes are obtained.

In step S104, part of the application processes are selected from the plurality of application processes, herein the part of the application processes are determined according to a running probability of each application process of the plurality of application processes in the multiple running processes.

In step S106, a first set of memory pages corresponding to the part of the application processes are cleaned.

The memory cleaning manner provided in the related art does not take into account dependency between application processes. Using the method as shown in FIG. 1, the dependency relationships between the first application process and the other application processes is determined according to the running probabilities of the other application processes in the multiple running processes of the first application process, and memory pages corresponding to the part of the application processes are selected to be cleaned according to the dependency relationships. Thus the problem that the memory cleaning manner provided in the related art does not consider the dependencies between the application processes is solved, and thereby the effectiveness of the memory cleaning is enhanced and the response speed of the system is increased.

In an exemplary embodiment, in step S104, selecting the part of the application processes from the plurality of application processes may include steps S1-S4.

In step S1, a first number of running times of the first application process in the multiple running processes is obtained.

In step S2, a second number of running times of each application process in the multiple running processes is obtained.

In step S3, the running probability is calculated by a ratio of the second number of running times to the first number of running times.

In step S4, the part of the application processes are selected in an order of the running probability from low to high.

When an application process runs in the foreground, for each memory page accessed by the system, application processes to which the memory page belongs are obtained and then whether all of these application processes belong to a set of application processes on which the application process running in the foreground depends is determined. However, a drawback of the manner lies in that there may be unrelated application processes running concurrently during the time period, thus they may be misunderstood as application-dependent. For that problem, a statistical probability way can be used to reduce side effects of the abovementioned drawback. Its basic idea is as follows. Assuming that an application process A depends on an application process B in the running process, and an application process C is an application process completely independent of the application process A. By counting a set of application processes for many times on which the application process A depends when running in the foreground, since the application process A depends on the application process B, whenever the application process A runs, the application process B is required to run. Therefore, the obtained set of application processes on which the application process A depends whenever running in the foreground certainly will contain the application process B. However, since the application process C is an application process completely independent of the application process A, the application process C is contained in the set of application processes on which the application process A depends only in the case that the application process C happens to run concurrently with the application process A in the foreground. Since there is no correlation between the application process C and the application process A, from the perspective of the statistical probability (the number of times of being contained in the set of application processes on which the application process A depends/the number of running times of the application process A in the foreground), the number of concurrent running times will not be large. Therefore, from the perspective of statistical probability, the following law can be found: the higher the statistical probability is, the larger the probability of the application process being an application on which a specific application process depends is. When the memory is cleaned, memory pages to which the application processes with lower statistical probabilities, selected from the set of application processes on which the application process running currently in the foreground depends, belong are first cleaned, thus, mis-cleaning of the application processes on which the foreground application process depends is avoided greatly.

In an exemplary embodiment, before the part of the application processes is selected from the plurality of application processes in step S104, the method may further include the following steps S5-S6.

In step S5, a second set of memory pages corresponding to other application processes that are not contained in the plurality of application processes during the multiple running processes is obtained.

In step S6, the obtained second set of memory pages is cleaned.

In an alternative embodiment, if it is found that part of the application processes are not running (not accessed) throughout during the multiple running processes of the first application process, then it can be concluded that there is no correlation between these application processes and the first application process. Therefore, the memory pages corresponding to these uncorrelated application processes may be directly cleaned to free up memory space for other purposes. Assuming that the application process A depends on the application process B in the running process, while the application process C and the application process D are completely independent of the application process A. By counting a set of application processes for many times on which the application process A depends when running in the foreground, since the application process A depends on the application process B, whenever the application process A runs, the application process B is required to run. Therefore, the obtained set of application processes on which the application process A depends whenever running in the foreground certainly will contain the application process B. However, since the application process C is an application process completely independent of the application process A, the application process C is contained in the set of application processes on which the application process A depends only in the case that the application process C happens to run concurrently with the application process A in the foreground. Since the application process D does not take part in running throughout when the application process A runs in the foreground, in the memory cleaning process, the memory page corresponding to the application process D first is taken as the cleaned object, and next the memory page corresponding to the application process C is taken as the cleaned object, and then the memory page corresponding to the application process B is taken as the cleaned object.

In an exemplary embodiment, in step S106, cleaning the first set of memory pages corresponding to the part of the application processes may include the following steps S7-S8.

In step S7, a third set of memory pages to be cleaned is obtained, herein the third set of memory pages contains the first set of memory pages, and the third set of memory pages is a supplementary set of the second set of memory pages.

In step S8, the first set of memory pages is selected from the third set of memory pages to be cleaned according to the part of the application processes. Herein in each cleaning process one memory page is selected from the first set of memory pages as a cleaned object using a LRU algorithm.

Referring to the abovementioned example, by counting a set of application processes for many times on which the application process A depends when running in the foreground, since the application process A depends on the application process B, whenever the application process A runs, the application process B is required to run. Therefore, the obtained set of application processes on which the application process A depends whenever running in the foreground certainly will contain the application process B. However, since the application process C is an application process completely independent of the application process A, the application process C is contained in the set of application processes on which the application process A depends only in the case that the application process C happens to run concurrently with the application process A in the foreground. The application process D does not take part in running throughout when the application process A runs in the foreground. The application process B and the application process C are combined together to correspond to the third set of memory pages, and the application process C corresponds to the first set of memory pages alone, and the application process D corresponds to the second set of memory pages. In the memory cleaning process, at first the second set of memory pages corresponding to the application process D is taken as the cleaned object, next the first set of memory pages corresponding to the application process C is taken as the cleaned object, and then the remaining memory pages obtained after the first set of memory pages are masked out from the third set of memory pages corresponding to the application process B is taken as the cleaned object.

In an exemplary embodiment, in step S106, after the first set of memory pages corresponding to the part of the application processes is cleaned, the method may further include the following steps S9-S11.

In step S9, it is determined whether a memory space obtained after the first set of memory pages is cleaned from the third set of memory pages satisfies a preset condition.

In step S10, if no, the part of the application processes are masked out from the plurality of application processes, and then one or more application processes are continued to be selected from the remaining application processes in an order of the running probability from low to high until the preset condition is satisfied.

In step S11, a fourth set of memory pages corresponding to the re-selected one or more application processes is cleaned.

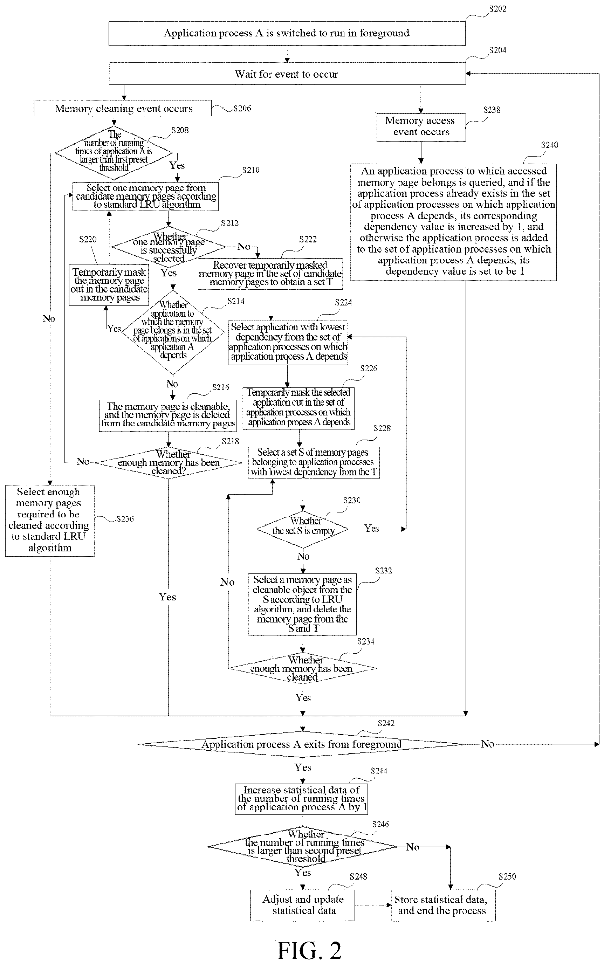

The abovementioned alternative implementation will be further described with reference to the alternative embodiment shown in FIG. 2.

FIG. 2 is a flow chart of a memory cleaning process in accordance with an alternative embodiment of the present invention. As shown in FIG. 2, the process may include the following steps S202-S250.

In step S202, when an application process A is switched to run in the foreground, the name of the foreground application process at this time is recorded as A.

In step S204, it is to wait for an event to occur; and if a memory cleaning event occurs, the process proceeds to step S206.

In step S206 to step S208, when the memory is required to be cleaned in the memory cleaning event, it is determined whether the number of running times of the application process A in the foreground reaches a first preset threshold; if yes, the process proceeds to step S210; and if no, the process proceeds to step S236.

In step S210, a memory page required to be cleaned is selected from candidate memory pages according to the LRU algorithm.

In step S212, it is determined whether a memory page required to be cleaned can be selected; if yes, the process proceeds to step S214; and if no, the process proceeds to step S222.

In step S214, it is determined whether the memory page belongs to the set of application processes on which the application process A depends; if the memory page does not belong to the set of application processes on which the application process A depends, the process proceeds to step S216; and if the memory page belongs to the set of application processes on which the application process A depends, the process proceeds to step S220.

In step S216, the memory page is marked as cleanable, and the memory page is deleted from the set of memory pages of the LRU.

In step S218, it is determined whether enough memory has been cleaned; if yes, the process proceeds to step S242; and if no, the process returns to step S210.

In step S220, the memory page is temporarily masked out in the candidate memory pages; and the process returns to step S210.

In step S222, the temporarily masked memory page in the set of candidate memory pages is recovered to obtain a set T.

In step S224, an application process with the lowest dependency is selected from the set of application processes on which the application process A depends.

In step S226, the selected application process is temporarily masked out in the set of application processes on which the application process A depends.

In step S228, a set S of memory pages belonging to the application process with the lowest dependency is selected from the set T.

In step S230, it is determined whether the set S is empty; if no, the process proceeds to step S232; and if yes, the process returns to step S224.

In step S232, a memory page is selected as a cleanable object from the set S according to the LRU algorithm, and the memory page is deleted from the set S and the set T.

In step S234, it is determined whether enough memory has been cleaned; if yes, the process proceeds to step S242; and if no, the process returns to step S228.

In step S236, enough memory pages required to be cleaned are selected according to the standard LRU algorithm; and the process proceeds to step S242.

In the alternative embodiment, the application process with the lowest dependency is first selected from the set of application processes on which the application process A depends, and next the memory pages belonging to the application process are selected from the set of memory pages of the LRU, and then these memory pages are selected to be marked as cleanable in an order of the LRU until enough memory is cleaned.

In step S238 to step S240, if a memory access event occurs, an application process to which the accessed memory page belongs is queried, and if the application process has already existed in the set of application processes on which the application process A depends, its corresponding dependency value is increased by 1; and otherwise, the application process is added to the set of application processes on which the application process A depends, and its dependency value is set to be 1.

In step S242, it is determined whether the application process A exits from the foreground; and if yes, the process proceeds to step S244; and if no, the process returns to step S204.

In step S244, if the application process A is switched from the foreground, the number of running times of the application process A in the foreground is increased by 1.

In step S246, it is determined whether the number of running times of the application process A in the foreground exceeds a second preset threshold; if yes, the process proceeds to step S248; and if no, the process proceeds to step S250.

In step S248, the statistical data are updated and part of old statistical data (for example, the number of running times and dependency values of all application processes in the set of application processes on which the application process A depends are decreased according to the preset percentage value (P)) are discarded.

In step S250, the statistical data are stored and the process ends.

As an alternative embodiment of the present invention, the technical scheme provided by the embodiment of the present invention can be implemented in an Android system. In the Android system, ActivityManagerService is responsible for controlling switching of the application process between the foreground and the background, and linux kernel is responsible for actual memory cleaning and memory access control. The alternative implementation process in the Android system is as follows.

In step 1), ActivityManagerService needs to send a message to the Linux kernel to illustrate an ID of the current application process when switching the application process.

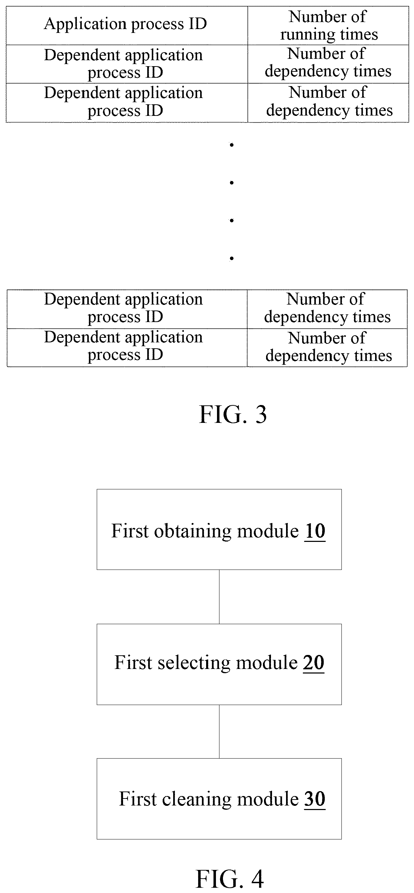

In step 2), FIG. 3 is a schematic diagram of a statistical data structure in accordance with an alternative embodiment of the present invention, and as shown in FIG. 3, the Linux kernel loads the statistical data structure corresponding to the application process into the memory after receiving the message from the ActivityManagerService. Herein, the statistical data structure may include: a plurality of application process IDs on which the application process ID running in the foreground depends as well as the number of corresponding running times of each dependent application process.

In step 3), if the number of running times of the current application process in the statistical data structure does not reach the first preset threshold when the Linux kernel selects the memory pages to be cleaned from its inactive memory page linked list, step 11) is executed; otherwise, step 4) is executed.

In step 4), the Linux kernel selects one memory page according to the LRU algorithm from its inactive memory page linked list, and if the memory page can be selected, step 5) is executed; otherwise, step 8) is executed.

In step 5), the application process ID to which the selected memory page belongs is queried, and if the set of dependent application processes of the statistical data structure of the current application does not contain the application process ID to which the memory page belongs, the memory page is marked as cleanable, and step 6) is executed; otherwise, step 7) is executed.

In step 6), if the memory is still required to be cleaned, step 3) is executed; otherwise, step 12) is executed.

In step 7), the memory page is skipped, and step 3) is executed.

In step 8), the dependent application process ID with the smallest number of dependency times is selected from the statistical data structure of the current application, and then all memory pages belonging to the dependent application process ID are taken from the inactive memory page linked list.

In step 9), one memory page is selected from the memory pages obtained in step 8) in an order of the LRU, and is marked as cleanable until the memory cleaning reaches a target value, and step 12) is executed; and if the target value cannot be reached after all of the memory pages obtained in step 8) are cleaned completely, then step 10) is executed.

In step 10), the dependent application process ID with the smallest number of dependency times selected in step 8) is excluded from the current application statistics structure, and step 8) is executed.

In step 11), the Linux kernel selects the memory page according to the LRU algorithm from its inactive memory page linked list until the target value of the memory cleaning is reached.

In step 12), if a memory access event occurs, step 13) is executed; otherwise, step 14) is executed.

In step 13), the application process ID to which the accessed memory page belongs is queried, and if the application process ID has already been in the statistical data structure, only the number of its corresponding dependency times is increased by 1; otherwise, the application process ID is added in the statistical data structure of the current application process, and the number of its corresponding dependency times is set to be 1. Another optimization approach for the number of dependency times refers to that: if the number of dependency times of the application process ID has been increased by 1, it will not be increased anymore.

In step 14), if an event that the current application process exits the foreground occurs, step 15) is executed; otherwise, step 3) is executed.

In step 15), the number of running times in the statistical data structure of the current application process is increased by 1, and if the number is greater than the second preset threshold, step 16) is executed; otherwise, step 17) is executed.

In step 16), the number of running times in the statistic data structure of the current application process is decreased according to a proportion P, and the number of all the dependency times in the statistical data structure of the current application process is decreased according to the proportion P.

In step 17), the statistical data structure of the current application process is stored; and the process ends.

FIG. 4 is a block diagram of an apparatus for cleaning memory in accordance with an embodiment of the present invention. As shown in FIG. 4, the apparatus for cleaning memory may include a first obtaining module 10, a first selecting module 20 and a first cleaning module 30. The first obtaining module 10 is arranged to obtain a plurality of application processes running simultaneously with a first application process in multiple running processes of the first application process. The first selecting module 20 is arranged to select part of the application processes from the plurality of application processes. Herein, the part of the application processes are determined according to a running probability of each application process of the plurality of application processes in the multiple running processes. The first cleaning module 30 is arranged to clean a first set of memory pages corresponding to the part of the application processes.

Using the apparatus shown in FIG. 4, the problem that the memory cleaning method provided in the related art does not consider dependencies between the application processes is solved, thus enhancing the effectiveness of the memory cleaning and increasing the response speed of the system.

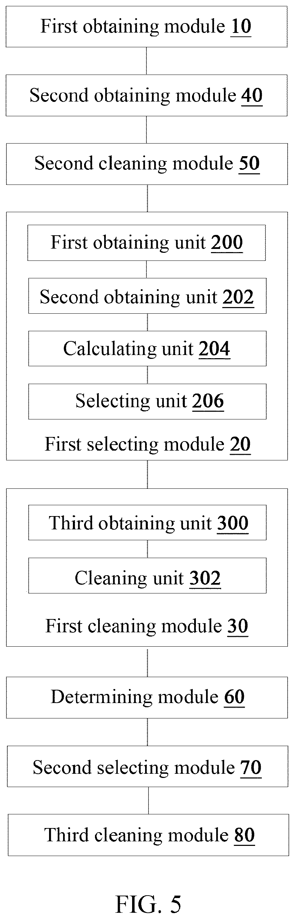

In an exemplary embodiment, as shown in FIG. 5, the first selecting module 20 may include a first obtaining unit 200, a second obtaining unit 202, a calculating unit 204 and a selecting unit 206. The first obtaining unit 200 is arranged to obtain a first number of running times of the first application process in the multiple running processes. The second obtaining unit 202 is arranged to obtain a second number of running times of each application process in the multiple running processes. The calculating unit 204 is arranged to calculate the running probability according to a ratio of the second number of running times to the first number of running times. The selecting unit 206 is arranged to select the part of the application processes in an order of the running probability from low to high.

In an exemplary embodiment, as shown in FIG. 5, the abovementioned apparatus may further include a second obtaining module 40 and a second cleaning module 50. The second obtaining module 40 is arranged to obtain a second set of memory pages corresponding to other application processes that are not contained in the plurality of application processes in the multiple running processes. The second cleaning module 50 is arranged to clean the obtained second set of memory pages.

In an exemplary embodiment, as shown in FIG. 5, the first cleaning module 30 may include a third obtaining unit 300 and a cleaning unit 302. The third obtaining unit 300 is arranged to obtain a third set of memory pages to be cleaned. Herein, the third set of memory pages contains the first set of memory pages, and the third set of memory pages is a supplementary set of the second set of memory pages. The cleaning unit 302 is arranged to select the first set of memory pages to clean from the third set of memory pages according to the part of the application processes. Herein, in each cleaning process, one memory page is selected from the first set of memory pages as a cleaned object by using an LRU algorithm.

In an exemplary embodiment, as shown in FIG. 5, the abovementioned apparatus may further include a determining module 60, a second selecting module 70 and a third cleaning module 80. The determining module 60 is arranged to determine whether a memory space obtained after the first set of memory pages is cleaned from the third set of memory pages satisfies a preset condition. The second selecting module 70 is arranged to, when an output of the determining module is no, mask the part of the application processes out from the plurality of application processes, and then continue to select one or more application processes from the remaining application processes in an order of the running probability from low to high until the preset condition is satisfied. The third cleaning module 80 is arranged to clean a fourth set of memory pages corresponding to the re-selected one or more application processes.

From the above description, it can be seen that the abovementioned embodiments achieve the following technical effects (it should be noted that these effects are achievable in some alternative embodiments). Using the technical scheme provided in the embodiments of the present invention, dependencies between application processes can be fully considered on the basis of the memory cleaning method provided in the related art, thereby enhancing the effectiveness of the memory cleaning and increasing the response speed of the system.

Obviously, those skilled in the art should understand that, various modules or steps of the present invention described above may be implemented by general-purpose computing devices, and they may be centralized on a single computing apparatus or distributed over a network consisting of a plurality of computing apparatuses. Alternatively, they may be implemented with program codes executable by the computing means so that they may be stored in the storage means and executed by the computing means, and in some cases, the steps shown or described herein may be performed in a order different from what shown herein or they can be made separately into individual integrated circuit modules, or a plurality of modules or steps therein can be made into a single integrated circuit module. Thus, the present invention is not limited to any particular combination of hardware and software.

The above description is only alternative embodiments of the present invention and is not intended to limit the present invention. For those skilled in the art, the present invention may have various changes and modifications. Any modifications, equivalent substitutions and improvements made within the essences and principles of the present invention are intended to be included in the protection scope of the present invention.

### Industrial Applicability

As described above, the method and apparatus for cleaning memory provided in the embodiments of the present invention have the following beneficial effects: dependencies between application processes can be fully considered, thereby enhancing the effectiveness of the memory cleaning, increasing the response speed of the system and decreasing the response time of the system.

## Claims

1. A method for cleaning memory, including:
obtaining a plurality of application processes running simultaneously with a first application process in multiple running processes of the first application process;
selecting part of the application processes from the plurality of application processes, wherein the part of the application processes are determined according to a running probability of each application process of the plurality of application processes in the multiple running processes; and
cleaning a first set of memory pages corresponding to the part of the application processes.

2. The method according to claim 1, wherein selecting part of the application processes from the plurality of application processes comprises:
obtaining a first number of running times of the first application process in the multiple running processes;
obtaining a second number of running times of each application process in the multiple running processes;
calculating the running probability by a ratio of the second number of running times to the first number of running times; and
selecting the part of the application processes in an order of the running probability from low to high.

3. The method according to claim 1, wherein before selecting part of the application processes from the plurality of application processes, the method further comprises:
obtaining a second set of memory pages corresponding to other application processes that are not contained in the plurality of application processes in the multiple running processes; and
cleaning the obtained second set of memory pages.

4. The method according to claim 2, wherein cleaning a first set of memory pages corresponding to the part of the application processes comprises:
obtaining a third set of memory pages to be cleaned, wherein the third set of memory pages contains the first set of memory pages, and the third set of memory pages is a supplementary set of the second set of memory pages; and
selecting the first set of memory pages to clean from the third set of memory pages according to the part of the application processes, wherein in each cleaning process, one memory page is selected from the first set of memory pages as a cleaned object by using a least recently used, LRU, algorithm.

5. The method according to claim 4, wherein after the first set of memory pages corresponding to the part of the application processes is cleaned, the method further comprises:
determining whether a memory space obtained after the first set of memory pages is cleaned from the third set of memory pages satisfies a preset condition;
if no, masking the part of the application processes out from the plurality of application processes, and then continuing to select one or more application processes from the remaining application processes in an order of the running probability from low to high until the preset condition is satisfied; and
cleaning a fourth set of memory pages corresponding to the re-selected one or more application processes.

6. An apparatus for cleaning memory, comprising:
a first obtaining module arranged to obtain a plurality of application processes running simultaneously with a first application process in multiple running processes of the first application process;
a first selecting module arranged to select part of the application processes from the plurality of application processes, wherein the part of the application processes are determined according to a running probability of each application process of the plurality of application processes in the multiple running processes; and
a first cleaning module arranged to clean a first set of memory pages corresponding to the part of the application processes.

7. The apparatus according to claim 6, wherein the first selecting module comprises:
a first obtaining unit arranged to obtain a first number of running times of the first application process in the multiple running processes;
a second obtaining unit arranged to obtain a second number of running times of each application process in the multiple running processes;
a calculating unit arranged to calculate the running probability by a ratio of the second number of running times to the first number of running times; and
a selecting unit arranged to select the part of the application processes in an order of the running probability from low to high.

8. The apparatus according to claim 6, wherein the apparatus further comprises:
a second obtaining module arranged to obtain a second set of memory pages corresponding to other application processes that are not contained in the plurality of application processes in the multiple running processes; and
a second cleaning module arranged to clean the obtained second set of memory pages.

9. The apparatus according to claim 7, wherein the first cleaning module comprises:
a third obtaining unit arranged to obtain a third set of memory pages to be cleaned, wherein the third set of memory pages contains the first set of memory pages, and the third set of memory pages is a supplementary set of the second set of memory pages; and
a cleaning unit arranged to select the first set of memory pages to clean from the third set of memory pages according to the part of the application processes, wherein in each cleaning process, one memory page is selected from the first set of memory pages as a cleaned object by using a least recently used, LRU, algorithm.

10. The apparatus according to claim 9, wherein the apparatus further comprises:
a determining module arranged to determine whether a memory space obtained after the first set of memory pages is cleaned from the third set of memory pages satisfies a preset condition;
a second selecting module arranged to, when an output of the determining module is no, mask the part of the application processes out from the plurality of application processes, and then continue to select one or more application processes from the remaining application processes in an order of the running probability from low to high until the preset condition is satisfied; and
a third cleaning module arranged to clean a fourth set of memory pages corresponding to the re-selected one or more application processes.
